(19) Europäisches Patentamt
European Patent Office
Office européen des brevets

(11) **EP 0 616 232 B1**

(12) **EUROPÄISCHE PATENTSCHRIFT**

(45) Veröffentlichungstag und Bekanntmachung des Hinweises auf die Patenterteilung:
**26.05.1999 Patentblatt 1999/21**

(51) Int Cl.⁶: **G01S 13/91**, G01S 13/92, G01S 13/42, G01S 13/87, G08G 1/08, G01S 13/34

(21) Anmeldenummer: **94103115.5**

(22) Anmeldetag: **02.03.1994**

(54) **Verkehrsradargerät**

Traffic radar system

Radar pour trafic

(84) Benannte Vertragsstaaten:
**AT BE CH DE GB IT LI LU NL**

(30) Priorität: **09.03.1993 DE 4307414**

(43) Veröffentlichungstag der Anmeldung:
**21.09.1994 Patentblatt 1994/38**

(73) Patentinhaber: **SIEMENS AKTIENGESELLSCHAFT**
**80333 München (DE)**

(72) Erfinder: **von Pieverling, Klaus, Dr.-Ing.**
**D-82515 Wolfratshausen (DE)**

(56) Entgegenhaltungen:
**EP-A- 0 414 567**          **EP-A- 0 497 093**
**DE-A- 2 327 186**

**Beschreibung**

Die Erfindung bezieht sich auf ein Verkehrsradargerät gemäß dem Oberbegriff des Anspruchs 1.

Zur Steuerung des Straßenverkehrsflusses werden insbesondere in Städten Verkehrssignalanlagen eingesetzt. Eine leistungsfähige Verkehrssteuerung erfordert dabei die Erfassung des Verkehrsaufkommens. Diese dazu notwendige Verkehrsdatenerfassung verwendet im allgemeinen automatisch arbeitende Straßenverkehrssensoren. Neben den bekannten Magnetfeldsensoren, wie Hallsensoren oder Schleifendetektoren, Ultraschallsensoren oder Strahlungssensoren werden auch Mikrowellensensoren, welche im allgemeinen nach einem Radarverfahren arbeiten, für die Verkehrserfassung eingesetzt. Eine Hochfrequenzquelle sendet Energie über eine Antenne auf die zu erfassenden Objekte, d.h. Fahrzeuge. Die reflektierte Hochfrequenzenergie wird dann im Empfänger ausgewertet. Diese Radarsensoren wurden bisher hauptsächlich zur Erfassung der Geschwindigkeit von Fahrzeugen verwendet, um die Geschwindigkeitssünder zu detektieren. Sie wurden auch für die Erfassung von Fahrzeugen zur Ermittlung des Verkehrsflusses zur Steuerung einer Verkehrslichtsignalanlage eingesetzt.

In der europäischen Offenlegungsschrift 0 497 093 -AI ist ein Verfahren und eine Einrichtung zur Erfassung von Fahrzeugen im Straßenverkehr für die Steuerung einer Verkehrssignalanlage beschrieben, welches Signalgeber, ein Verkehrssteuergerät und zumindest eine Radarantennenanordnung mit einem zugehörigen Radargerät als Straßenverkehrssensor aufweist, wobei die Signale des Fahrzeugdetektors im Steuergerät zur Bildung von Schaltkriterien für die Verkehrssignalanlage verarbeitet und mittels Entfernungs- und Geschwindigkeitsselektion jeweilige Fahrzeuge detektiert werden. Dabei kann das Radargerät im FM-CW-Modus und/oder im Winkelpeilungsmodus betrieben werden. Für eine Winkelpeilung sind zwei azimutal gegeneinander versetzte Strahlungskeulen vorgesehen. Wie diese gebildet und wie die Radar-Empfangsdaten verarbeitet werden, ist dort nicht näher beschrieben.

In der US-PS 4 908 615 ist ein System und ein Verfahren zur Steuerung von Verkehrslichtsignalanlagen beschrieben, welches zur Fahrzeugdetektion ebenfalls ein Radargerät verwendet. Dabei können sowohl sich annähernde Fahrzeuge als auch an der Lichtsignalanlage anhaltende Fahrzeuge detektiert werden. Mit dem bekannten Radargerät ist es möglich, die Fahrzeuge zu lokalisieren. Dazu wird mit einem feinen, stark gebündelten Sendestrahl der zu überwachende Fahrbahnbereich horizontal und vertikal abgetastet, wobei das Radargerät in einem sehr hohen Frequenzbereich arbeiten muß. Das macht ein derartiges Radargerät teuer, weil ein erheblicher Aufwand erforderlich ist. Zudem sind in nachteiliger Weise entweder mehrere Sender oder je eine mechanische Ablenkvorrichtung für beide Abtastrichtungen erforderlich, was leicht zu Störungen führen kann. Für einen breiten Einsatz in der Straßenverkehrserfassung dürfte das bekannte Radargerät daher kaum in Frage kommen.

Aufgabe der Erfindung ist es, ein Verkehrsradargerät für die Erfassung von Fahrzeugen und zur Bestimmung der Fahrspur des jeweiligen Fahrzeugs derart auszubilden, daß die mit dem Radargerät gewonnenen Daten eine präzise Aussage über den Verkehrsfluß bezüglich Fahrspur und Entfernung erlauben, um eine bessere Steuerung einer Verkehrssignalanlage zu ermöglichen.

Diese Aufgabe wird bei einem eingangs geschilderten Verkehrsradargerät mit den kennzeichnenden Merkmalen des Anspruchs 1 gelöst.

Das erfindungsgemäße Radargerät mit Einrichtungen zur Selektion der empfangenen Echosignale nach Entfernung und Radialgeschwindigkeit weist zwei fest angeordnete Radarantennen auf, die sich teilweise überlappenden Strahlungskeulen abstrahlen. Diese zwei Radarkeulen werden weder mechanisch noch elektrisch durch Verschwenken einer einzigen Sendekeule gebildet, wie dies aus der o.g. US-Patentschrift bekannt ist. Das hat gegenüber dem bekannten Verfahren den Vorteil, daß weder eine Reihe von mechanischen Teilen erforderlich ist noch elektrische Umschalteinrichtungen. Diese fest angeordneten Antennen erzeugen zwei zueinander exakt zugeordnete und daher genau definierte Strahlungskeulen. Die aus dem Antennenkeulenbereich über die zwei Radarantennen getrennt empfangenen Echosignale werden in zwei getrennten Kanälen weiter verarbeitet, wobei durch Korrelation der Azimutwinkel jeweiliger Fahrzeuge ermittelt und daraus die Position der Fahrzeuge bestimmt wird. Dazu wird mit einem Oszillator, der in seiner Frequenz mit einem Sägezahngenerator gesteuert ist, ein Sendesignal erzeugt, welches über einen Teiler an jeweils einen Hohlleiter zu den Radarantennen geführt ist. Die sich mit dem Sendesignal überlagernden jeweiligen Empfangssignale werden in jedem Kanal für sich gleichgerichtet und das somit gewonnene Frequenzdifferenzsignal wird digitalisiert und einer Entfernungsfilterbank zugeführt, und dies für jeden Kanal, was auch im folgenden der Fall ist.

Am Ausgang der Entfernungsfilterbank stehen für jeweilige Entfernungsbereiche orthogonale Signalkomponenten, also für jeweilige Entfernungsabschnitte Signalpaare nach X und Y, an. Diese werden über einen Zwischenspeicher zur Weiterverarbeitung einer Doppelfilterbank zugeführt, einem Fast-Fourier-Analysator, der eine Radialgeschwindigkeitsanalyse vornimmt. Die sich daraus für jeden Entfernungsbereich ergebenden Spektralkomponenten (Spektralwertepaare) werden einer Schwellwertvergleichseinrichtung zugeführt, in der die Amplituden aller Spektralkomponenten mit einer vorgegebenen Schwelle verglichen werden. Die über der Schwelle liegenden Spektralkomponenten werden in einer Signalwinkelverarbeitungseinrichtung weiter verarbeitet, wobei zusammengehörende Signale, sogenannte Vektorpaare, miteinander verknüpft werden, um eine jeweilige Winkeldifferenz zu ermitteln, mit der aufgrund der geometrischen Anordnung der Radarantennen der jeweilige Azimutwinkel der betreffenden Fahrzeuge ermittelt wird. In einer nachgeordneten Spurdiskriminatoreinrichtung wird aus dem Azimutwinkel, der Fahrzeugentfernung und der Fahrzeuggeschwindigkeit die entsprechende Fahrzeugspur, auf der sich das Fahrzeug befindet, ermittelt.

Nähere Einzelheiten und Vorteile der Erfindung ergeben sich aus der folgenden Beschreibung, in der anhand der Zeichnung die Erfindung näher erläutert wird. Dabei zeigen

Fig. 1 ein Blockschaltbild bezüglich Radargerät und Mikrowellenteil,

Fig. 2 ein Zeitdiagramm mit Sende- und Empfangssignalen,

Fig. 3 ein Blockschaltbild für die Signalauswertung,

Fig. 4 ein Zeitdiagramm der Empfangssignale über viele Perioden und

Fig. 5 ein Vektordiagramm der Ausgangssignale der Doppler filterbank.

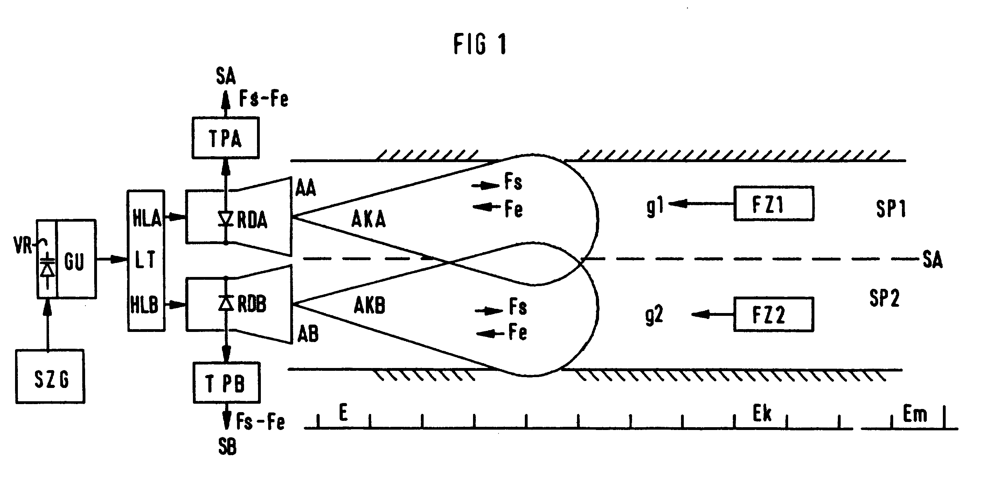

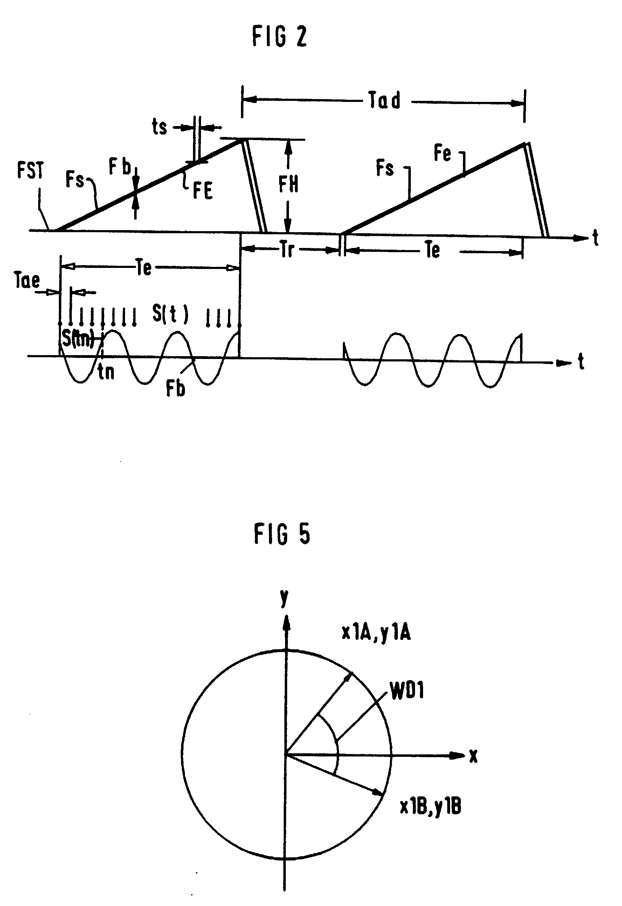

Das in Fig.1 gezeigte Verkehrsradargerät ist beispielsweise vier Meter über der Straße angeordnet, wobei die Radarantennen AA und AB mit ihren jeweiligen Antennenkeulen AKA und AKB zwei Fahrspuren SP1 und SP2 ausleuchten. Dort befinden sich vereinfacht gezeigt auf jeder Spur ein Fahrzeug FZ1 und FZ2, welche mit unterschiedlicher Geschwindigkeit gl und g2 auf das Radargerät zufahren. Der Radarsender ist von einem Gunnoszillator GU gebildet, dessen Frequenz über den Varaktor VR steuerbar ist. Als Steuersignal dient der Sägezahngenerator SZG. Das Ausgangssignal mit Frequenz Fs bezeichnet des Gunnoszillators GU wird mit dem Teiler LT in zwei Hälften geteilt und läuft in je einen Hohlleiter HLA und HLB für die Kanäle A und B, an dessen Ende jeweils eine Radarantenne AA und AB angeschlossen ist. Die Antennen AA,AB beleuchten über zwei sich überlappende Keulen AKA, AKB die vor dem Radargerät liegende Straße. Sie sind hier symmetrisch angeordnet und weisen insofern eine Symmetrieachse auf, die mit SA bezeichnet ist. Die beiden Fahrzeuge FZ1 und FZ2 reflektieren einen Teil dieser Mikrowellenenergie. Dieses Empfangssignal, Frequenz Fe, gelangt über die Antenne AA,AB zurück in die Hohlleiter HLA und HLB und überlagert sich mit dem Sendesignal, Frequenz Fs. In den Hohlleitern sind jeweils Richtdioden RDA und RDB eingebaut, welche das Überlagerungssignal (Fs/Fe) gleichrichten. Das hierbei entstehende Mischprodukt, gekennzeichnet durch die Frequenzdifferenz Fb = Fs - Fe, wird über die Tiefpässe TPA und TPB ausgefiltert und stellt die im folgenden weiterzuverarbeitenden Signale SA und SB für die Kanäle A und B dar, allgemein hier mit S(t) bezeichnet, wie in Fig. 2 gezeigt.

Der zeitliche Ablauf von Sende- und Empfangssignalen ist aus der Fig. 2 ersichtlich. Die Sendefrequenz Fs startet von der Startfrequenz FST aus und steigt mit zeitlich linearem Anstieg Te bis zu einem Maximalwert FST + FH, wobei FH der Frequenzhub ist. Mit Erreichen des Maximalwertes FST + FH fällt die Frequenz Fs mit relativ steilem Abfall wieder auf den Ausgangswert FST zurück. Dieser Vorgang wiederholt sich nun in regelmäßigen Zeitabständen Tad, die Sägezahnwiederholzeit. Der Zeitbereich zwischen dem Beginn des Sägezahnrücklaufs und dem erneuten Start wird als Rücklaufzeit Tr bezeichnet. Die Empfangsfrequenz Fe zeigt grundsätzlich den gleichen Zeitverlauf wie die Sendefrequenz Fs mit dem einzigen Unterschied, daß der Verlauf der Empfangsfrequenz Fe gegenüber der Sendefrequenz Fs zeitlich leicht verzögert ist, und zwar um die Radarlaufzeit ts:

$$ts = 2*R/c \qquad (1)$$

R = Echoentfernung, c = Lichtgeschwindigkeit.

Es ist wichtig anzumerken, daß im Rahmen der hier betrachteten Echoentfernungen diese Laufzeit stets klein gegenüber der Empfangszeit Te ist. Im weiteren interessiert der Überlappungsbereich der beiden Sägezähne der Sendefrequenz Fs und der Empfangsfrequenz Fe im ansteigenden Bereich. Wegen des vergleichsweise kleinen Betrages der Laufzeit ts kann dieser Überlappungsbereich dem Anstiegsbereich der Sendefrequenz Fs gleichgesetzt werden.

Die kleine Zeitverschiebung ts ist zwar im Rahmen der Empfangsgesamtzeit Te vernachlässigbar, bewirkt jedoch aufgrund des hohen Frequenzhubes FH eine ausgeprägte Frequenzdifferenz Fb = Fs-Fe . Unter der Verwendung von Gleichung (1) gilt folgende Beziehung:
Frequenzdifferenz

$$Fb = Fs(t) - Fe(t) = H*ts/Te = 2* R * H/(c*Te) \qquad (2)$$

Zum besseren Verständnis sind die verwendeten Parameter mit praktischen, konkreten Werten angegeben:

| FST | Startfrequenz | 34,35 GHz |
|-----|---------------|-----------|
| FH | Frequenzhub | 30 MHz |
| I | Wellenlänge des Radargerätes (Frequenz FST+FH/2) | 0.873 cm |
| c | Lichtgeschwindigkeit | 300000 km/s |
| Te | Empfangszeit | 25.6 µs |
| Tae | Entfernungs-Abtastintervall | 400 µs |
| Tad | Sägezahnwiederholzeit | 90.7 µs |
| R | Echoentfernung | 100 m |
| ts | Signallaufzeit | 0.667 µs |
| Fb | Frequenzdifferenz | 781 kHz. |

Die Wellenlänge 1 spielt bei den Geschwindigkeitsbetrachtungen eine entscheidende Rolle. Allgemeiner formuliert ergibt sich für obige Parameter eine entfernungsproportionale Empfangs-Frequenzdifferenz

$$Fb/m = 7.81 \text{ kHz/m}$$

Der zeitliche Verlauf S(t) der Empfangssignale mit der Frequenz Fb ist in der unteren Zeile der Figur 2 als sich wiederholender Sinuszug dargestellt.

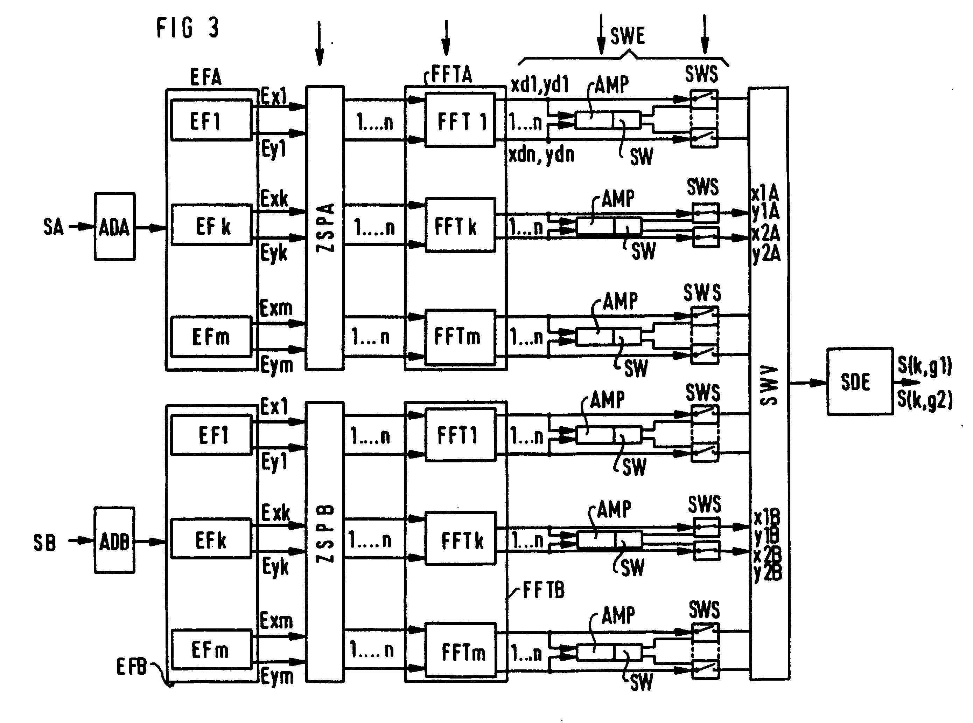

Für die Signalauswertung werden die beiden Empfangssignale S(t), d.h. SA und SB, mit einem Analog-Digitalwandler ADA und ADB (Fig.3) digitalisiert und für eine weitere Signalauswertung analysiert und dazu einer Entfernungsfilterbank EFA bzw. EFB zugeführt. Das ist im Blockschaltbild gemäß der Fig.3 gezeigt und wird im folgenden weiter erläutert.

Die Signalauswertung enthält zwei für die beiden Kanäle A und B gleich aufgebaute Entfernungsfilterbänke EFA, EFB mit nachgeschalteten FFT-Analysatoren (Doppelfilterbank). Die Aufgabe dieser Anordnung besteht darin, die Echos der Fahrzeuge so aufzubereiten, daß sie in der nachfolgenden Signalwinkelverarbeitungseinrichtung SWV nach Fahrzeugen getrennt zur Verfügung stehen.

Die weitere Beschreibung richtet sich auf Kanal A und gilt, soweit nicht anderweitig erwähnt, uneingeschränkt auch für Kanal B.

Das in der zweiten Zeile der Fig. 2 dargestellte Empfangssignal S(t) weist drei charakteristische Merkmale auf:

- Frequenz Fb charakterisiert durch den Abstand der Nulldurchgänge
- Amplitude = Höhe der Sinuskuppen
- Phase = Position der Nulldurchgänge.

Die Entfernungsfilterbank EFA bzw. EFB besteht aus Bandpässen, deren Mitten frequenzen aneinander anschließen und so dimensioniert sind, daß die vom interessierenden Entfernungsbereich aufgrund der Gleichung (2) erzeugten Frequenzen erfaßt werden. Das Empfangssignal eines bestimmten Entfernungsbereichs EI bis En erscheint somit am Ausgang desjenigen Einzelfilters EF1, EF2, ... EFm der Filterbank, welches auf die zugehörige Frequenz Fb abgestimmt ist. Jedem Teilfilter der beispielsweise aus 32 Einzel filtern (m = 32) bestehenden Filterbank läßt sich damit ein Entfernungsabschnitt EI bis Em (Fig.1) auf der Straße zuordnen, wobei die absolute Entfernung durch die Mittenfrequenz des Filters und die Breite des Entfernungsabschnittes durch die Bandbreite des Filters gegeben ist.

In Fig. 1 ist schematisch der den jeweiligen Einzelfiltern EFI bis EFm der Entfernungsfilterbank EF zugehörige Entfernungsabschnitt EI bis Em skizziert. Im Entfernungsbereich Ek sollen dabei zwei Fahrzeuge FZ1, FZ2 nebeneinander mit unterschiedlicher Geschwindigkeit g1, g2 fahren. Diese beiden Fahrzeuge liefern Ausgangssignale am Ausgang Ek des Entfernungsfilters EFk in der Entfernungsfilterbank EF (Fig.3).

Die Entfernungsfilter EFI bis EFm sind zweckmäßiger Weise in Digitaltechnik realisiert und führen jeweils einen zweifachen Rechenalgorithmus durch:

$$Ex(k) = \sum_{N=1}^{n=Ne} S(tn) * \cos(2 * \pi * k * tn) * Tae \qquad (4a)$$

$$Ey(k) = \sum_{n=1}^{n=Ne} S(tn) * \sin(2*\pi*k*tn) * Tae \qquad (4b)$$

S(tn)    Empfangssignal
tae      Abtastzeit des Signales S(t)
tn       Abtastzeitpunkte des Signales S(t)
k        Mittenfrequenz des Entfernungsfilters k
n=1     Ne Abtastpunkte (z.B. N = 64)

Fig. 2 zeigt in der zweiten Zeile die einzelnen Komponenten.

Dieser als diskrete Fourieranalyse bekannter Algorithmus (z.B.H.Götz: Einführung in die digitale Signalverarbeitung, B.G. Täubner, Stuttgart 1990) liefert am Ausgang jedes Entfernungsfilters EF zwei Signalkomponenten x und y und erfaßt damit die drei Komponenten der Empfangssignale:

- Frequenz = Nummer des auf das Empfangssignal abgestimmten Entfernungsfilters

- Amplitude und Phase werden repräsentiert durch die orthogonalen Komponenten Exk und Eyk des auf das Empfangssignal abgestimmten Filters.

Betrachtet man das Entfernungsfilter EFk für sich, so erzeugt dieses aus Ne Abtastwerten zwei orthogonale Komponenten Exk und Eyk, deren Amplituden nur dann nennenswerte Größe annimmt, wenn die Eingangs frequenz Fb des Signals S(t) im Bereich der Filterfrequenz k liegt.

Mit der gezeigten Entfernungsfilterbank EFA bzw. EFB lassen sich zwar Fahrzeuge aus unterschiedlichen Entfernungen voneinander selektieren, nicht jedoch die zwei Fahrzeuge FZ1,FZ2 im Entfernungsbereich Ek. Diese erzeugen am Ausgang des Entfernungsfilters EFk ein Signalgemisch. Dieses auszuwerten geschieht in der nachgeordneten Doppelfilterbank FFT.

Die Doppelfilterbank FFT führt eine Rodielgeschwindigkeitsanalyse der Ausgangssignale der Entfernungsfilterbank EF durch. Zum besseren Verständnis hierfür sollen zunächst das Empfangssignal S(t) noch einmal näher betrachtet werden, wobei das Hauptaugenmerk der Signalphase aufeinanderfolgender Sinuszüge gilt.

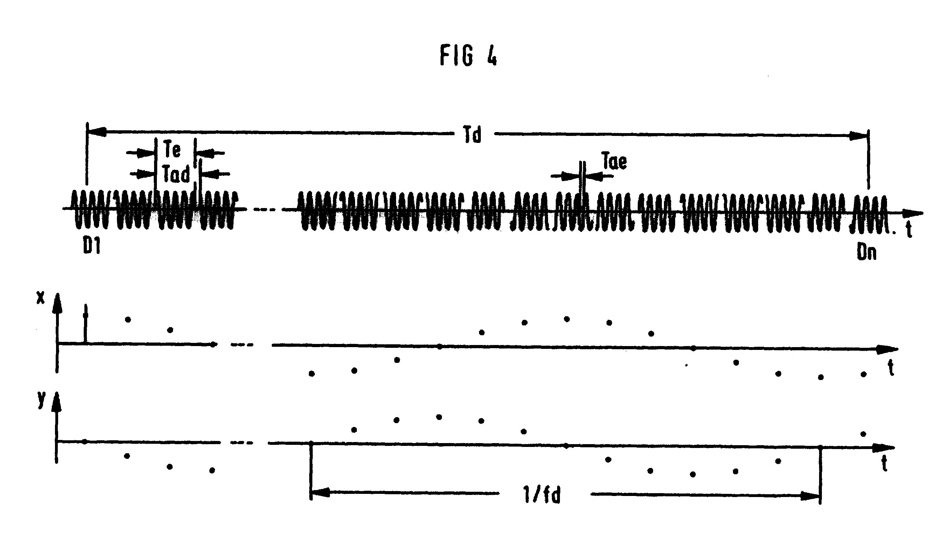

In Fig. 2 sind zwei aufeinanderfolgende Sinuszüge gezeichnet, die vom Echo eines feststehenden Objekts bzw. Fahrzeuges FZ stammen. Man erkennt das Ziel mit der Radialgeschwindigkeit Null daran, daß aufeinanderfolgende Sinuszüge absolut identisch erscheinen insbesondere stets mit der gleichen Phasenlage beginnen und enden. In Fig.4 ist im Gegensatz dazu eine größere Anzahl aufeinanderfolgender Sinuszüge eines bewegten Objekts, eines Fahrzeugs, gezeigt. Die einzelnen Sinuszüge werden in regelmäßigen Zeitabständen Tad (Sägezahnwiederholzeit, z. B. 90 µs) ermittelt, siehe dazu auch Fig. 2.

Während dieser kurzen Zeit bewegt sich das Fahrzeug im Millimeterbereich. Diese winzige Ortsveränderung hat zwar vernachlässigbaren Einfluß auf die absolute Objektentfernung und damit auf die Frequenz Fb, jedoch erheblichen Einfluß auf die Phasendifferenz zwischen Sende- und Empfangssignal und damit auf die beim Uberlagerungsvorgang sich ergebende Phase des Signals S(t). Bei diesen Phasenänderungen muß die Ortsveränderung des Fahrzeugs in Relation zur Radarwellenlänge (1=1.24 cm) betrachtet werden. Beim genauen Betrachten der Fig. 4 erkennt man die unterschiedliche Phasenlage der Sinuszüge. In den beiden unteren Zeilen der Fig. 4 sind die x- bzw. y-Komponenten des jedem Sinuszug zugeordneten Ausgangssignals eines Entfernungsfilters EF gemäß Gleichung (4) gezeichnet für den Fall, daß die Signalfrequenz Fb im Durchlaßbereich des Filters liegt, d.h. nennenswerte Amplituden erzeugt. Man erkennt, wie sich mit der Phase die Werte der Komponenten x und y ändern. Die Wertepaare x,y aneinandergereiht deuten jeweils eine um 90° versetzte Sinusfunktion an, deren Frequenz fd die Doplerfrequenz und damit die Radialgeschwindigkeit des Fahrzeugs repräsentiert.

Die Dopplerfrequenz errechnet sich zu

$$fd = vr/(1/2) \qquad (5)$$

fd    Dopplerfrequenz (Hz)
vr    Radialgeschwindigkeit des Meßobjekts in m/s
l     Wellenlänge des Radargerätes in m

Gleichung 5 läßt unter Betrachtung von Fig.5 sich wie folgt verständlich machen:

Der Reziprokwert der Dopplerfrequenz l/fd gibt die Zeitdifferenz an, innerhalb welcher die Sinuslinien der beiden unteren Zeilen gerade eine volle Periode durchlaufen. In dieser gleichen Zeit hat sich auch die Phasenlage der Sinuszüge (oberste Zeile) um 360° verschoben. Verantwortlich für diese Phasenverschiebung ist eine leichte Veränderung des Abstandes zwischen Meßobjekt und Radargerät. Wenn sich das Fahrzeug um eine halbe Wellenlänge bewegt hat, so ändern sich sowohl der Hinweg als auch der Rückweg des Mikrowellensignals um diesen Betrag, d.h. die gesamte Wegänderung entspricht dem zweifachen Betrag, also einer ganzen Wellenlänge. Die Phasenbeziehung zwischen Sende- und Empfangssignal ändert sich um einen äquivalenten Betrag, also um 360°. Mit anderen Worten kann somit die Dopplerfrequenz folgendermaßen definiert werden:

Dopplerfrequenz fd = Relativbewegung zwischen Verkehrsradargerät und Fahrzeug, gemessen in Anzahl halber Radar-Wellenlängen pro Sekunde.

Es sei der Vollständigkeit halber erwähnt, daß sich natürlich die Frequenz Fb (Fig.2) durch die Radialgeschwindigkeit aufgrund des Dopplereffekts leicht verändert, wobei die Frequenz (verglichen mit einem stehenden Fahrzeug) in Abhängigkeit vom Vorzeichen der Radialgeschwindigkeit steigt oder fällt. Diese Frequenzverschiebung ist jedoch vergleichsweise klein, so daß sie innerhalb eines Sinuszuges praktisch nicht erkennbar wird, sondern sich erst über mehrere Sinuszüge in der beschriebenen Weise auswirkt.

Mit einer zweiten, jedem Entfernungsfilter EF nachgeschalteten Filterbank FFT kann diese Dopplerfrequenz analysiert werden. Die Dopplerfrequenzfilterbank ist im vorliegenden Beispiel durch einen FFT-Analysator (Fast-Fourier-Analysator) realisiert. (Zur detaillierten Erklärung des FFT-Algorithmus sei auf die oben bereits erwähnte Literaturstelle verwiesen).

Der in diesem Ausführungsbeispiel verwendete FFT-Algorithmus erzeugt aus n= 256 zeitlichen Abtastwertepaaren x(t), y(t) n= 256 Spektralwertepaare xd(fd), yd(fd). Als zeitliche Abtastwerte dienen die in den beiden unteren Zeilen der Fig. 4 gezeigten Wertepaare x,y. Das Abtastzeitintervall entspricht der Zeit Tad (Abtastintervall für Doppleranalyse) und ist gleich der Sägezahnwiederholzeit gemäß Fig. 2.

Zur Realisierung der FFT-Analyse werden im Zwischenspeicher ZSP jeweils 256 Wertepaare x,y (siehe Fig. 4) zwischengespeichert. Es werden also sämtliche Ausgangssignale über den Zeitraum n*Tad = Td zwischengespeichert. Dieser Zeitraum Td ist damit die Gesamtanalysezeit, die für die Ermittlung von Entfernung und Geschwindigkeit aller interessierender Fahrzeuge benötigt wird. Die Ausgangswerte der FFT-Analysatoren geben die Spektralkomponenten an, welche in der durch die n Abtastwertepaare x(t), y(t) gegebenen Zeitfunktionen vorhanden sind. So erscheinen am Ausgang des FFT-Analysators für den Entfernungsbereich Ek entsprechend dem Entfernungsfilter EFk zwei getrennte Spektralwerte, zuzuordnen den Geschwindigkeiten g1,g2 der beiden Fahrzeuge FZ1 und FZ2 gemäß Fig. 1. Der FFT-Analysator führt damit die bisher nicht mögliche Selektion der beiden Fahrzeuge durch.

Betrachtet man die bisher beschriebene Auswertung, so erkennt man, daß sich das Empfangssignal S(t) matrixartig verzweigt, nämlich durch die Entfernungsfilterbank EF (z.B. in 32 Zweige) und dann pro Entfernungsfilter EF in jeweils n (beispielsweise n = 256) Zweige durch den jeweils nachgeschalteten FFT-Analysator (Dopplerfilterbank). Zur Reduzierung der mit dieser Verzweigung einhergehenden Datenflut werden die Amplituden aller Spektralkomponenten (Wertepaare) an den Ausgängen der FFT-Analysatoren berechnet (AMP in Fig.3), mit einer Schwelle SW verglichen und nur solche Signale weiterverarbeitet, welche einen Mindestwert überschreiten. Im vorliegenden Beispiel werden durch die Schwellwertschalter SWS nur jeweils zwei Signalkomponenten weitergeleitet, nämlich im Zweig k die durch die beiden Fahrzeuge FZ1,FZ2 nach Fig.1 erzeugten Echosignale.

Zur Ermittlung der Fahrspur beschränkten sich die weiteren Betrachtungen auf das Fahrzeug FZ1, da für das Fahrzeug FZ2 alle Ausführungen analog gelten. Im Gegensatz zum bisherigen werden nunmehr die Signale der beiden Kanäle A und B miteinander verknüpft. Hierzu dient die Signalwinkelverarbeitungseinrichtung SWV (siehe Fig. 3).

Zur Vereinfachung seien die Signale des Fahrzeuges FZ1 am Eingang der Signalwinkelverarbeitungseinrichtung SWV wie folgt bezeichnet.

x1A, y1A für Kanal A
x1B, y1B für Kanal B.

Diese Signale sind in Fig.5 als Vektoren dargestellt, wobei die Winkelbezüge dieses Bildes besonders interessieren. Betrachtet man die Vektoren x1A,y1A; x1B,y1B für sich, so hängt ihre Winkelrichtung zur X-Achse von sehr vielen Parametern ab, auf die hier nicht weiter eingegangen werden soll. Interessant dabei ist jedoch der Winkel, welchen diese beiden Vektoren miteinander einschließen. Dieser Winkel ist ein Maß dafür, wie weit das Fahrzeug FZ1 (Fig.1) links oder rechts außerhalb der Symmetrieachse SA der beiden Antennen AA/AB liegt. Ein Fahrzeug auf der Symmetrieachse SA, gestrichelte Linie in Fig.1, weist gleiche Signallaufzeit zu den beiden Antennen A und B auf. Ein Fahrzeug oberhalb der gestrichelten Linie hat eine größere Laufzeit zur Antenne B, ein Fahrzeug unterhalb der gestrichelten Linie hat eine größere Laufzeit zur Antenne A. Diese Laufzeitunterschiede erscheinen als Winkeldifferenz der beiden Vektoren gem. Fig.5. Im ersten Fall decken sich die Richtungen der Vektoren, in den beiden anderen Fällen ergibt sich jeweils eine Winkeldifferenz mit unterschiedlichen Vorzeichen. Die Winkeldifferenz der Vektoren ist also ein Maß für den Azimutwinkel des Fahrzeugs. Gerätetechnisch gegebene Laufzeitunterschiede in den Kanälen A und B lassen sich durch Justiermaßnahmen eliminieren.

Zur Berechnung der Winkeldifferenz WD1 bildet man zunächst ein Vektorprodukt und ermittelt dann dessen Winkel bezüglich der X-Achse (dargestellt in komplexer Schreibweise, allgemein aus der Mathematik bekannt):

$$x+iy = (x1A*iy1A) * (x1B-iy1B) \tag{6a}$$

$$x+iy = (x1A*x1B+y1A*y1B)+i(y1A*x1B-x1A*y1B) \tag{6b}$$

$$WD1 = atn\ (y/x) \qquad x\ 0 \tag{6c}$$

$$WD1 = atn\ (y/x) \qquad + \qquad x\ 0 \tag{6c}$$

Mit der Bestimmung des Azimutwinkels ist nunmehr eine Fahrspurbestimmung sehr einfach möglich. Die Fahrspur SP wird ermittelt, indem man am einfachsten mit Hilfe des Winkelwertes WD1 und der Fahrzeugentfernung, die durch die Nummer k des Entfernungsfilters EF bzw. durch den Entfernungsbereich Ek gegeben ist, eine Tabelle adressiert, in welcher die zugehörige Spur als Funktion von Entfernung und Azimutwinkel niedergelegt ist. Diese Funktion führt die Spurdiskriminatoreinrichtung SDE durch. An ihrem Ausgang erscheint damit das Fahrzeug FZ1, gekennzeichnet durch seine Entfernung k, seine Geschwindigkeit g1 und seine Fahrspur SP1.

Bezüglich der Fahrspurbestimmung ist noch folgendes zu bemerken. Die beschriebene Bestimmung des Azimutwinkels und damit der Fahrspur ist nur dann gewährleistet, wenn jeweils die Signalechos nur eines Fahrzeuges bei der Winkelberechnung in Gleichung (6) vorhanden ist, d.h. eine essentielle Voraussetzung für die Fahrspurermittlung besteht darin, daß alle Fahrzeuge, die sich gleichzeitig auf der Straße befinden, getrennt verfügbar sind und somit nacheinander bezüglich der Fahrspurberechnung bearbeitet werden können. Diese Voraussetzung ist solange gegeben, solange die Fahrzeuge sich entweder in unterschiedlicher Entfernung aufhalten oder mit unterschiedlicher Geschwindigkeit fahren. Das erfindungsgemäße Verfahren versagt also, wenn zwei Fahrzeuge mit exakt gleicher Geschwindigkeit (z.B. Geschwindigkeitsdifferenz kleiner als 1 km/h) nebeneinander fahren. In diesem Fall liefert der FFT-Analysator ein Signalgemisch von beiden Fahrzeugen, dessen Weiterverarbeitung zu fehlerhafter Spurberechnung führt. Die praktische Erfahrung jedoch zeigt, daß derartige Situationen zwar vorkommen, jedoch von zeitlich begrenzter Dauer sind und durch Plausibilitätskontrollen erkannt werden.

Mit dem erfindungsgemäßen Verkehrsradargerät ist es auch möglich, aus der ermittelten Radialgeschwindigkeit die tatsächliche Geschwindigkeit der einzelnen Fahrzeuge zu berechnen.

## Patentansprüche

1. Verkehrsradargerät mit zumindest einer Radarantenne zur Ausleuchtung der zu überwachenden Verkehrsfläche und mit Einrichtungen zur Selektion der empfangenen Echosignale nach Entfernung und Radialgeschwindigkeit, **dadurch gekennzeichnet**, daß mit zwei fest angeordneten Radarantennen (AA,AB) sich teilweise überlappende Antennenkeulen (AKA und AKB) gebildet sind,

daß durch Korrelation der von den beiden Antennenkeulen (AKA,AKB) empfangenen Echosignale (Fe) der Azimutwinkel jeweiliger Fahrzeuge (FZ1, FZ2,..) ermittelt und daraus die Position bestimmt wird,
daß mittels eines Sägezahngenerators (SZG) ein in seiner Frequenz gesteuerter Oszillator (GU) ein Sendesignal (Fs) erzeugt, welches über einem Teiler (LT) jeder Radarantenne (AA,AB) zugeführt ist,
daß die sich mit dem Sendesignal (Fs) überlagernden jeweiligen Empfangssignale (Fe) in zwei getrennten Kanälen (A,B) gleichgerichtet (RDA, RDB), je einem Tiefpaß (TPA, TPB) zugeführt und als jeweiliges Frequenzdifferenzsignal (SA,SB) über einen Analog-Digital Wandler (ADA, ADB) einer Entfernungsfilterbank (EFA, EFB) zugeführt werden,
daß die am Ausgang der Entfernungsfilterbank (EFA, EFB) für jeweilige Entfernungsbereiche (El bis Em) anstehenden orthogonale Signalkomponenten (Ex(lbis m)A, Ey(l bis m)A bzw. Ex(l bis m)B, Ex(l bis m)B) über einen Zwischenspeicher (ZSPA, ZSPB) einer Dopplerfilterbank (FFTA bzw. FFTB) zugeführt werden, die aufgrund einer Fast-Fourier-Analyse Spektralkomponenten für jeden Entfernungsbereich ermittelt, welche einer Schwellwertvergleichseinrichtung (SWE) zugeführt sind, in der die Amplituden (AMP) aller Spektralkomponenten mit einer vorgegebenen Schwelle (SW) verglichen werden, wobei die über der Schwelle liegenden Spektralkomponenten einer Signalwinkelverarbeitungseinrichtung (SWV) zugeführt werden,

daß in der Signalwinkelverarbeitungseinrichtung (SWV) zusammengehörende Signale beider Kanäle miteinander verknüpft und daraus jeweilige Winkeldifferenzen (WD1,WD2) und aufgrund der geometrischen Anordnung der Radarantennen jeweilige Azimutwinkel ermittelt werden,
und daß in einer Spurdiskriminatoreinrichtung (SDE) aus dem Winkelwert, der Fahrzeugentfernung und -geschwindigkeit die entsprechende Fahrzeugspur (SP1, SP2) ermittelt wird.

2.  Verkehrsradargerät nach Anspruch 1,
    **dadurch gekennzeichnet**, daß in der Spurdiskriminatoreinrichtung für die einzelnen Fahrzeugspuren die Spur als Funktion von Entfernung und Azimutwinkel tabellarisch hinterlegt ist.

3.  Verkehrsradargerät nach Anspruch 1,
    **dadurch gekennzeichnet,** daß aus den Meßgrößen Entfernung, Azimutwinkel, Radial-Geschwindigkeit sowie der Aufstellungshöhe des Radargerätes fortlaufend die momentane Position des Fahrzeuges auf der Straße sowie die wahre Geschwindigkeit berechnet oder aus Tabellen ausgelesen wird.

4.  Verkehrsradargerät nach Anspruch 1,
    **dadurch gekennzeichnet,** daß das Radargerät am Straßenrand aufgestellt wird.

## Claims

1.  Traffic radar having at least one radar antenna for illuminating the traffic area to be monitored and having devices for selection of the received echo signals on the-basis of range and radial speed, characterized in that partially overlapping antenna lobes (AKA and AKB) are formed by two radar antennas (AA, AB) arranged in fixed positions, in that the azimuth angle of respective vehicles (FZ1, FZ2, ..) is determined by correlation of the echo signals (Fe) received by the two antenna lobes (AKA, AKB), and the position is determined from said azimuth angle, in that a sawtooth generator (SZG) is used by an oscillator (GU) whose frequency is controlled to produce a transmission signal (Fs) which is supplied via a splitter (LT) to each radar antenna (AA, AB), in that the respective received signals (Fe), with the transmission signal (Fs) superimposed, are rectified (RDA, RBB) in two separate channels (A, B), are each passed to a low-pass filter (TPA, TPB) and are supplied as respective frequency difference signal (SA, SB) via an analogue/digital converter (ADA, ADB) to a range filter bank (EFA, EFB), in that the orthogonal signal components (Ex(1 to m)A, Ey(1 to m)A and Ex(1 to m)B, Ex(1 to m)B, respectively), which are present at the output of the range filter bank (EFA, EFB) for respective range bands (El to Em), are passed via a buffer store (ZSPA, ZSPB) to a Doppler filter bank (FFTA or FFTB, respectively), which uses a Fast Fourier Analysis to determine spectral components for each range band, which are passed to a threshold comparison device (SWE) in which the amplitudes (AMP) of all the spectral components are compared with a predetermined threshold (SW), those spectral components which are above the threshold being passed to a signal angle processing device (SWV), in that associated signals in the two channels are linked to one another in the signal angle processing device (SWV) and are used to determine respective angle differences (WD1, WD2) and, on the basis of the geometric arrangement of the radar antennas, respective azimuth angles, and in that a track discriminator device (SDE) is used to determine the corresponding vehicle track (SP1, SP2) from the angle value, the vehicle range and the vehicle speed.

2.  Traffic radar according to Claim 1, characterized in that the track for the individual vehicle tracks is stored in tabular form, as a function of range and azimuth angle, in the track discriminator device.

3.  Traffic radar according to Claim 1, characterized in that the instantaneous position of the vehicle on the road as well as the true speed are calculated continually from the measurement variables of range, azimuth angle, radial speed as well as the installation height of the radar, or are read from tables.

4.  Traffic radar according to Claim 1, characterized in that the radar is installed at the edge of the road.

## Revendications

1.  Radar de trafic comportant au moins une antenne de radar pour couvrir la zone de circulation à contrôler et des dispositifs pour distinguer des signaux d'écho reçus selon la distance et la vitesse radiale,
    caractérisé par le fait que des lobes d'antennes (AKA et AKB) se chevauchant partiellement sont formés par deux antennes de radar (AA, AB) fixes,

l'angle azimutal de véhicules respectifs (FZ1, FZ2, ...) est déterminé par la corrélation des signaux d'écho (Fe) reçus par les deux lobes d'antennes (AKA, AKB) et la position en est déterminée,

au moyen d'un générateur d'impulsions en dents de scie (SZG), un oscillateur (GU) commandé en fréquence produit un signal d'émission (Fs), qui est envoyé, par l'intermédiaire d'un diviseur (LT), à chaque antenne de radar (AA, AB),

les signaux de réception (Fe) respectifs se superposant au signal d'émission (Fs) sont redressés (RDA, RDB) dans deux canaux (A, B) distincts, sont envoyés chacun à un filtre passe-bas (TPA, TPB) et sont envoyés comme signal de différence de fréquence respectif (SA, SB) par l'intermédiaire d'un convertisseur analogique-numérique (ADA, ADB), à un banc de filtres de distance (EFA, EFB),

les composantes de signal orthogonales (Ex(1 à m)A, Ey(1 à m)A et Ex(1 à m)B, Ey(1 à m)B), apparaissant à la sortie du banc de filtres de distance (EFA, EFB) pour des plages de distance (E1 à Em) respectives, sont envoyées, par l'intermédiaire d'une mémoire intermédiaire (ZSPA, ZSPB), à un banc de filtres Doppler (FFTA, FFTB), qui détermine, sur la base d'une analyse de Fourier rapide, pour chaque plage de distance, des composantes spectrales qui sont envoyées à un dispositif de comparaison à valeur de seuil (SWE), dans lequel les amplitudes (AMP) de toutes les composantes spectrales sont comparées à un seuil (SW) prédéterminé, les composantes spectrales supérieures au seuil étant envoyées à un dispositif de traitement d'angle de signal (SWV),

dans le dispositif de traitement d'angle de signal (SWV), des signaux, allant ensemble des deux canaux sont combinés, des différences angulaires (WD1, WD2) respectives en sont déterminées et des angles azimutaux respectifs sont alors déterminés sur la base de la disposition géométrique des antennes de radar, et

dans un dispositif discriminateur de voie (SDE), la voie de circulation (SP1, SP2) correspondante du véhicule considéré est déterminée à partir de la valeur angulaire, de la distance du véhicule et de la vitesse du véhicule.

2.  Radar de trafic selon la revendication 1,
    caractérisé par le fait que, dans le dispositif discriminateur de voie pour les diverses voies de circulation, la voie est enregistrée dans un tableau comme fonction de la distance et de l'angle azimutal.

3.  Radar de trafic selon la revendication 1,
    caractérisé par le fait que, à partir des grandeurs mesurées, à savoir la distance, l'angle azimutal et la vitesse radiale, et à partir de la hauteur de l'emplacement du radar, la position instantanée du véhicule sur la route et sa vitesse réelle sont constamment calculées ou lues dans des tableaux.

4.  Radar de trafic selon la revendication 1,
    caractérisé par le fait que le radar est placé au bord de la route.

FIG 1

EP 0 616 232 B1

## FIG 2

## FIG 5

FIG 3

FIG 4